# EUROPEAN PATENT APPLICATION

(11) **EP 1 867 444 A2**
(43) Date of publication of application: **19.12.2007**
(21) Application number: 07011384.0
(22) Date of filing: 11.06.2007
(51) Int. Cl.: B25J 9/16

(54) **Robot simulation apparatus**

(30) Priority: 15.06.2006 JP 2006166482
(71) Applicant: Fanuc Ltd, Minamitsuru-gun, Yamanashi 401-0597 (JP)
(72) Inventor: Nagatsuka, Yoshiharu, Minamitsuru-gun Yamanashi 401-0511 (JP); Oyamada, Masahiro, Minamitsuru-gun Yamanashi 401-0511 (JP)
(74) Representative: Thum, Bernhard

(57) **Abstract**

A robot simulation apparatus, which lays out a shape model of a robot equipped with a hand, and shape models of a case and of work pieces contained therein on a display screen in a prescribed positional relationship, and simulates a picking operation of the robot, which picks the work piece with the hand, the apparatus having; a case dimension setting portion for setting the shape model of the case to a prescribed shape and dimensions; an interference checking portion for checking for interference between the hand and the case when the robot is operated to take out a work piece from the side of a inner wall of the case, and if there is interference, identifying the interference; a hand changing portion for changing the shape model of the hand so that there is no longer any interference between the hand and the case when it is determined by the interference checking portion that there is interference between the hand and the case; and a product data acquiring portion for acquiring data on the actual product dimension of the hand from the shape model of the hand changed by the hand changing portion.

## Description

### Background of the Invention

### 1. Field of the Invention

The present invention relates to a robot simulation apparatus, which simulates a picking operation with a robot hand in an animated manner.

### 2. Related Art

In general, a robot simulation apparatus for simulating a robot operation in an animated manner has been known from the disclosure of Japanese Patent Publication No.2001-105359. The robot simulation apparatus as disclosed in this Patent Document comprises a storage portion for storing shape models for a robot, a work piece, and peripheral equipment, a display portion for displaying the shape models on a display screen, and a dimension setting portion for selecting a specific shape model having dimensions to be changed and setting the dimensions of the shape model on the display screen. Thus, even when environmental conditions including the robot have changed and the dimensions of the work piece and peripheral equipment have changed, it is not necessary to prepare and read-in a new shape model for a CAD, so that the robot simulation can be more easily carried out.

As an example, a robot that is provided with a camera as a vision sensor and performs a picking operation, is disclosed in Japanese Patent Publication No. 2000-293695, although this example is not concerned with a robot simulation apparatus. The camera is used for photographing work pieces, which are randomly piled up in a case. Image processing of the photographed image is performed by an image processor, and the position and posture of the work pieces are thereby recognized enabling automated picking of the piled-up work pieces.

The robot simulation apparatus disclosed in Japanese Patent Publication No. 2001-105359 facilitates setting and changing of the size of the work pieces or peripheral equipment so that the robot can be operated without interfering with its surrounding when environmental conditions including the robot have changed. However, the above-mentioned apparatus does not change the dimensions of the robot hand by simulating the picking operation with the robot hand. Therefore, in a picking operation performed with the robot hand, it is necessary to operate the robot hand repeatedly in the actual work-site area in order to examine whether or not the robot hand can reach work pieces contained in the case or whether or not the wall of the case interferes with the operation of the robot hand. Thus, the design of a robot hand must depend heavily upon the knowledge and experience of a designer, which is very time consuming.

### Summary of the Invention

In view of the above described problem, it is an object of the present invention to provide a robot simulation apparatus that is capable of decreasing the amount of time required to design a robot hand in response to changing environmental conditions in which a robot carries out a picking operation, and permits design of a robot hand to be carried out easily.

In order to obtain the above object, in accordance with the present invention, a robot simulation apparatus which lays out a shape model of a robot equipped with a hand, and shape models of a case and work pieces contained in the case, on a display screen in a prescribed positional relationship, and simulates a picking operation of the robot, which picks up a work piece with the hand, the apparatus comprising: a case dimension setting portion for setting the shape model of the case to a prescribed shape and dimension; an interference checking portion for checking for interference between the hand and the case when the robot is operated to take out work pieces from a side of a inner wall of the case, and if there is interference, identifying it; a hand changing portion for changing the shape model of the hand so that there is no interference between the hand and the case when it is determined by the interference checking portion that there is interference between the hand and the case; and a product data acquiring portion for acquiring data on actual product dimension of the hand from the shape model of the hand changed by the hand changing portion.

In accordance with the invention, the case dimension setting portion can be used to set the shape model of a case having a multiplicity of work pieces randomly contained therein to a prescribed shape, along with dimensions corresponding to the actual case. The interference checking portion can be used to check for interference between the hand and the case during the simulated picking operation, and if there is interference, the interference portion can be identified. When it is determined that there is interference, the hand changing portion can be used to change the shape model of the hand based on the identified interference portion such that the hand does not interfere with the case. The product data acquiring portion can be used to acquire data on actual product dimensions of the hand from the changed shape model of the hand to be stored in memory. Thus, a designer of the robot hand can reflect the data on the product dimensions stored in the memory to design the actual robot hand, so that the time required for design change in response to the change of environmental conditions surrounding the robot can be decreased, and design of the robot hand can be thereby simplified.

In the robot simulation apparatus, the hand changing portion can be used to change the dimensions of the interference portion.

Thus, by using the hand changing portion to change the dimensions of the identified interference portion, the time required for design of the robot hand can be substantially decreased. For example, the length of the robot hand can be changed to any size.

Also, in the robot simulation apparatus, the hand changing portion can be used to select a hand of an arbitrary shape from a library of hands stored in the memory.

Therefore, the same effect as claimed in claim 2 can be obtained by using the hand changing portion to select, for example, a hand of arbitrary length from the library (database) in which data on a multiplicity of shape models are stored.

Also, in the robot simulation apparatus, the interference checking portion can be used to check for interference between peripheral equipment and the like, added to the hand of the robot and the case, and when it is determined that there is interference between the peripheral equipment and the case, the hand changing portion can be used to change the shape model of the hand so that peripheral equipment and the like does not interfere with the case.

Thus, since the interference checking portion can be used to check for interference caused by peripheral equipment provided on the hand, interference can be checked in various portions in which interference in the picking operation may be problem, so that the range of application of the robot simulation apparatus can be expanded.

In the robot simulation apparatus, peripheral equipment may include a vision sensor used to photograph work pieces contained in the case.

Thus, interference between the vision sensor provided on the robot hand and the case, can be checked so that design of the robot hand can be carried out under conditions closer to the actual picking operation at a work-site area.

### Brief Description of the Drawings

The above and other objects, features, and advantages of the present invention will become more apparent from the description of the preferred embodiments as set forth below with reference to the accompanying drawings, wherein:
Fig. 1 is a view showing the construction of a robot simulation apparatus according to an embodiment of the present invention;
Fig. 2 is a perspective view showing a robot hand and a case displayed on a display screen;
Fig. 3 is a flow chart showing the processing flow of simulation executed by the robot simulation apparatus shown in Fig. 1;
Fig. 4 is a view useful for explaining the step S2 of Fig. 3;
Fig. 5 is a view useful for explaining the step S3 and S4 of Fig. 3;
Fig. 6 is a perspective view showing the state of a robot hand and a case displayed on a display screen in a variant of the present embodiment;
Fig. 7 is a flow chart showing the processing flow of simulation executed by the robot simulation apparatus of Fig. 6;
Fig. 8 is a view useful for explaining the step S2 of Fig. 6; and
Fig. 9 is a view useful for explaining step SA1 of Fig. 6.

### Detailed Description

A robot simulation apparatus (hereinafter referred to as "simulation apparatus") according to the present invention will be described in detail below with reference to the drawings. In the drawings, same or like parts common to various drawings are denoted by same reference numerals or symbols, and duplicate explanation is omitted.

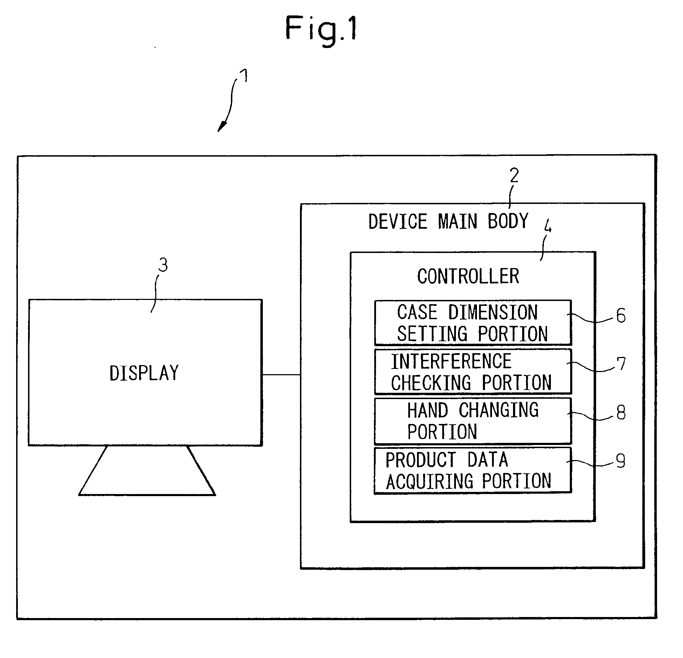

A simulation apparatus 1 of the present embodiment is capable of performing off-line simulation of picking work (operation) executed by a real robot, and has, as shown in Fig. 1, an apparatus main body 2 having a control function, and a display 3 connected to the apparatus main body 2 for displaying a graphic image. Although not shown in the Figure, the apparatus main body 2 includes a keyboard and a mouse as a pointing device for designating a specific position on the screen of the display 3.

The apparatus main body 2 has a controller 4 and an interface (not shown). The controller 4 has a CPU (not shown) and various types of memory (not shown), such as a ROM, RAM, and flash memory. A system program for controlling the entire simulation apparatus is stored in ROM. The RAM is used for temporary storage of data for processing executed by the CPU. In addition to data and various set values for the operational program of the robot, programs and various data necessary for execution of the present method are stored in the flash memory.

The controller 4 is electrically connected via an interface to the display 3, the keyboard, mouse, robot controller (not shown) and the CAD device for transmission and reception of an electric signal. From the CAD device, shape data on 3-dimensional models of the robot 10 having the robot hand 11, the case and work pieces (not shown) contained therein are transmitted and stored in the flash memory so that the robot 10 and the case 5 may be displayed in a prescribed positional relationship on the screen of the display 3. The input signal is processed by the controller 4 so as to allow various functions to be carried out.

In one aspect, the controller 4 consists essentially of the following components. Thus, the controller 4 has a data acquiring portion (not shown) for acquiring various shape data on the robot 10 and the case 5 transmitted from the CAD device and displaying them on the screen of the display 3, a case dimension setting portion 6 for setting the shape model of the case for containing work pieces of a prescribed shape and dimension, an interference checking portion 7 for checking whether or not there is interference between the robot hand 11 and the case 5 at the time of operating the robot 10 to take out the work pieces from the side of the inner wall of the case 5, a hand dimension changing portion (hand changing portion) 8 for changing the dimension of the robot hand 11 at the interference portion when it is determined by the interference checking portion 7 that there is interference between the robot hand 11 and the case 5, and a product data acquiring portion 9 for acquiring data on the actual product dimensions of the robot hand 11 from the shape model of the robot hand 22 changed by the hand dimension changing portion. The interference portion between the robot hand 11 and the case 5 is identified by the interference checking portion 7.

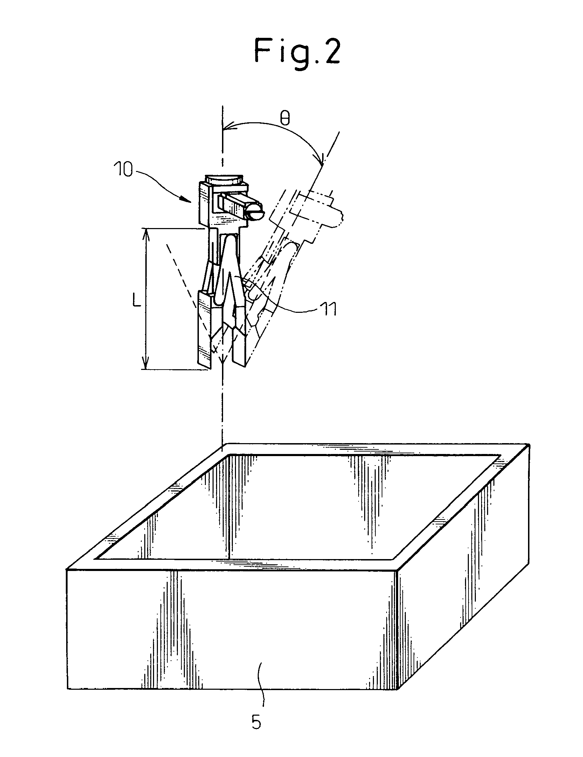

As the display 3, a liquid crystal display or a CRT display may be applied so as to display a 3-dimensional model of the robot 10 having the hand 11 and a 3-dimensional model of the case 5 graphically on the screen. In Fig. 2, the robot hand 11 and the case 5 are arranged in a prescribed positional relationship. This positional relationship is selected so as to reproduce the positional relationship on the actual work-site area. The method of graphic display is arbitrary, and may be a solid model display, frame model display, wire model display, or the like. 3-dimensional data of the robot hand 11 and the case 5 can be directly read-in from the CAD device, but may be indirectly captured via a storage medium.

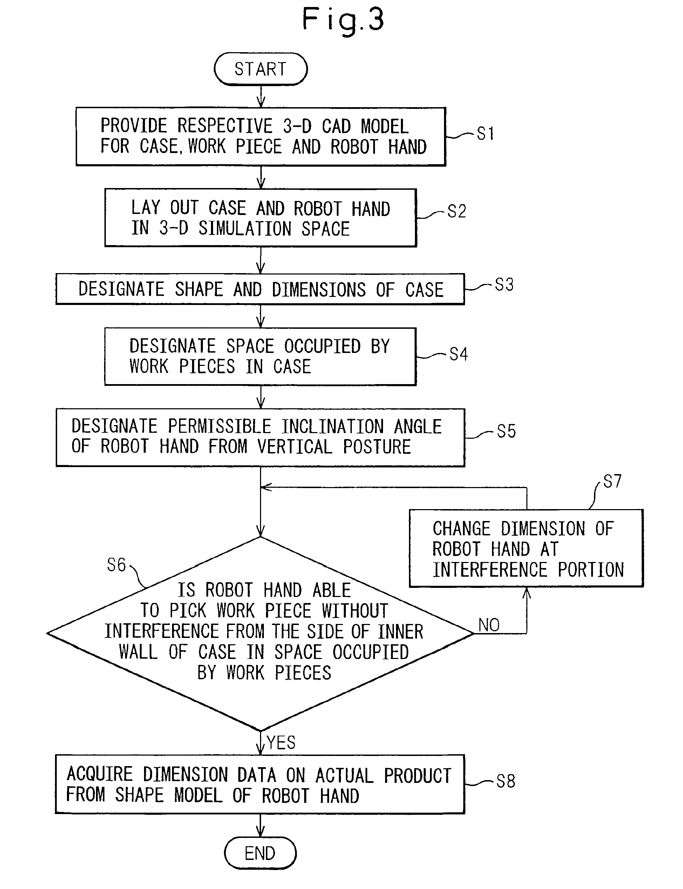

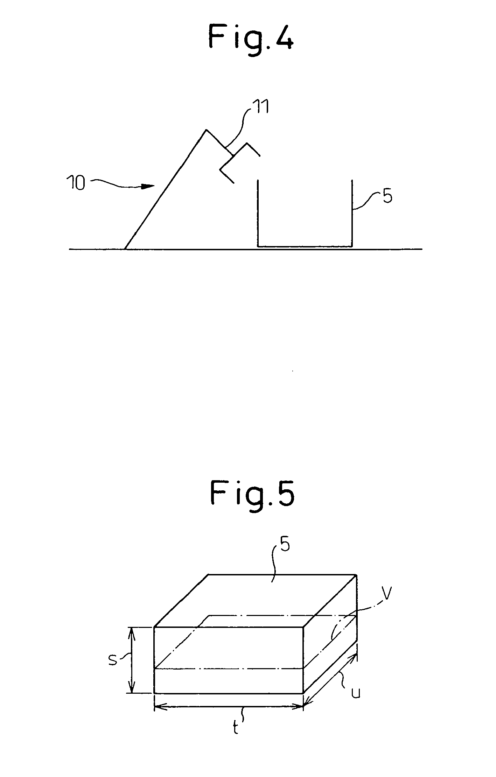

Next, the picking simulation using the simulation apparatus 1 according to this embodiment will be described with reference to a flow chart shown in Fig. 3, and the explanatory views shown in Figs. 4 and 5.

At step S1, 3-dimensional models of the case 5, the work pieces (not shown), and the robot hand 11 are read-in from the CAD device, and at step S2, are graphically displayed on the screen of the display 3 in a relative positional relationship corresponding to the actual work environment.

At step S3, as shown in Fig. 5, the shape and dimensions of the case 5 forming a rectangular parallelepiped, that is, the height s, width t, and depth u are set (case dimension setting portion 6).

At step S4, the size of an imaginary occupied space V, occupied with respect to the case 5 by a multiplicity of work pieces randomly contained in the case 5 is set. In the present embodiment, the imaginary occupied space V is set as a 3-dimensional space.

At step S5, the attitude (permissible inclination angle θ) of the robot hand 11 when a work piece can be grasped by the robot hand 11 from the side of the inner wall of the case 5 is determined in the imaginary occupied space V of the work pieces. More specifically, it is checked whether or not the work piece can be grasped when the robot hand 11 descends vertically at four corners of the upper and lower surfaces of the imaginary occupied space V of the work pieces (eight corners in total). If the work piece cannot be grasped, it is checked whether or not the work piece can be grasped by tilting the robot hand 11 at an arbitrary angle.

At step S6, the robot hand 11 is operated in simulation, and it is checked whether or not there is interference between the robot hand 11 and the inner wall of the case 5 when a work piece is to be picked out from the inner wall side of the case 5 (the inner wall side including the corners of the case 5 and the four sides of the case 5) (the interference checking portion 7). At the same time, the interference portion between the robot hand 11 and the case 5 is identified.

At step S7, if there is interference between the robot hand 11 and the case 5, the dimension of the robot hand 11 at the interference portion is changed (the hand changing portion 8). More specifically, the length dimension L of the robot hand 11 is suitably changed repeatedly in the range of 1/2 - 3 times initially set value until it is determined by the interference checking portion that there is no interference.

At step S8, data on the actual product dimensions of the robot hand 11 is acquired from the shape model of the robot hand 11 when the robot hand 11 is changed so as to not interfere with the case 5 (the product data acquiring portion 9).

As described above, with the simulation apparatus 1 according to the present embodiment, time required for design change of the robot hand 11 corresponding to change of environmental conditions surrounding the robot 10 can be decreased by reflecting the length L of the robot hand 11 stored in memory on the design of the actual robot hand, and the design of the robot hand 11 can be carried out more easily.

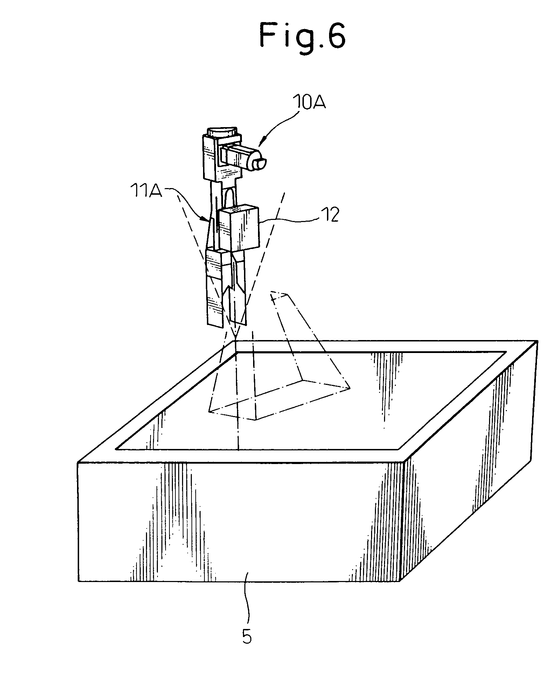

Next, a simulation apparatus according to a variant of the present embodiment will be described. As shown in Fig. 6, this variant is the robot hand 11A of Fig. 2 provided with a vision sensor 12. Only the difference will be described below, constituents common to the previous embodiment are denoted by same reference numerals and symbols and duplicate explanation thereof is omitted.

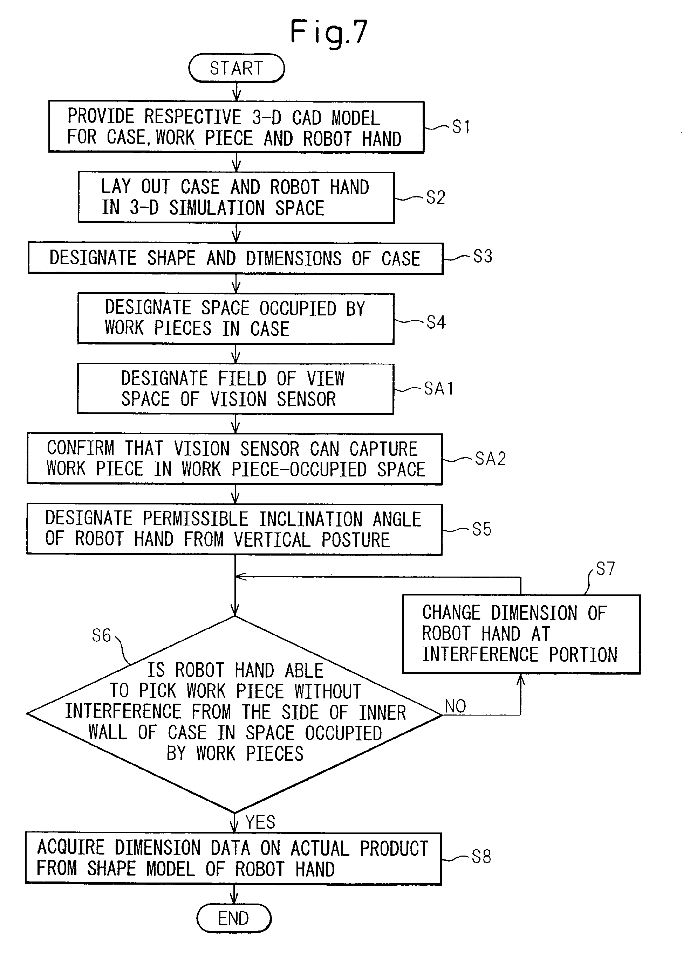

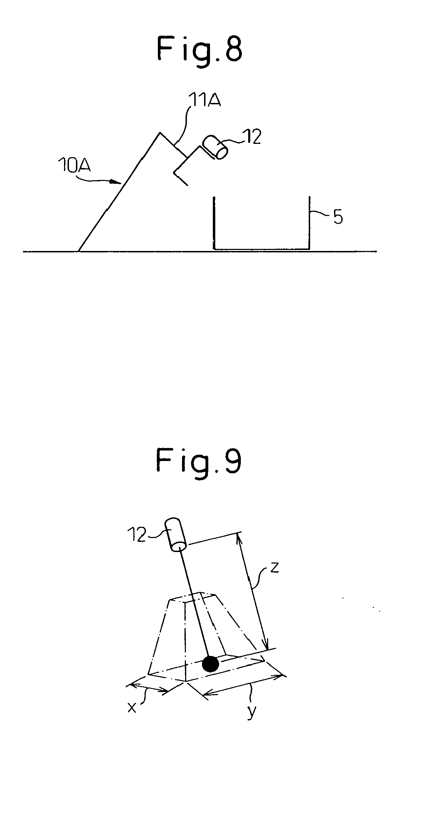

As shown in Fig. 7 in a flow chart, after a robot hand 11A with a vision sensor 12 is laid out on the screen of the display 3 at step S2, the field-of-view space of the vision sensor 12 is set at step SA1 that follows the steps S3 and S4. More specifically, the range of space in which the field of view of the vision sensor 12 is not obstructed by the robot hand 11A is designated. In this variant, the width x of the field of view, the length y of the field of view, and the standoff value z are designated (Fig. 9).

At step SA2, the robot hand 11A is moved along the frame-like edge of the inside of the case 5 (the side of the inner wall including the corners of the case 5 and the four sides of the case 5) and it is determined that the field-of-view space of the vision sensor 12 coincides with or is larger than the size of the case 5 (?).

After step S5, it is determined at step S6 whether or not the work piece can be grasped with no interference between the vision sensor 12 and the case 5. If it is determined that the work piece can be grasped with no interference, the processing flow proceeds to step S8. If it is determined that there is interference, the dimension of the robot hand 11A is changed at step S7 so that the sensor 12 and the case 5 do not interfere with each other (the hand changing portion 8).

As has been described above, in another aspect of the present embodiment, interference between the vision sensor 12 provided as peripheral equipment on the robot hand 11A and the case 5 can be checked, and simulation can be performed under conditions close to the actual operation of the robot hand, so that the range of application of the robot simulation apparatus 1A can be expanded, and the precision of the simulation can be improved.

The present invention is not limited to the above- described embodiments, but can be carried out in various modification without departing from the spirit and scope of the invention. For example, although, in the present embodiment and the variant thereof, the length L of the robot hand 11 can be changed, it is also possible as an alternative to change the robot hand by selecting a robot hand of different dimension from a library in which data on a multiplicity of shape models of robot hands are stored. Robot hands of not only different length, but also different types can be registered in the library, so that it is possible to flexibly responds flexibly to the diverse forms of picking operations.

## Claims

1. A robot simulation apparatus (1), which lays out a shape model of a robot (10) equipped with a hand (11) and shape models of a case (5) and work pieces contained in the case (5) on a display screen (3) in a prescribed positional relationship, and simulates a picking operation of the robot (10), which picks the work piece with the hand (11), **characterized in that** the apparatus (1) comprises:
a case dimension setting portion (6) for setting a shape model of a case (5) to a prescribed shape and dimension;
an interference checking portion (7) for checking for the presence or absence of interference between the hand (11) and the case (5) when the robot (10) is operated to take out the work piece from a side of a inner wall of the case (5), and if there is interference, identifying an interference portion of the hand (11);
a hand changing portion (8) for changing a shape model of the hand (11) so as to eliminate the interference between the hand (11) and the case (5) when it is determined by the interference checking portion (7) that there is interference between the hand (11) and the case (5); and
a product data acquiring portion (9) for acquiring data on an actual product dimension of the hand (11) from the shape model of the hand (11) changed by the hand changing portion (8).

2. A robot simulation apparatus according to claim 1,
**characterized in that** the hand changing portion (8) can be used to change dimensions of the interference portion.

3. A robot simulation apparatus according to claim 1,
**characterized in that** the hand changing portion (8) can be used to select a hand (11) of an arbitrary shape from a library of hands stored in memory.

4. A robot simulation apparatus according to any one of claims 1-3,
**characterized in that** the interference checking portion (7) can be used to check for the presence or absence of interference between a peripheral equipment added to the hand (11) and the case (5), and that, if it is determined that there is interference between the peripheral equipment and the case (5), the hand changing portion (8) can be used to change the shape model of the hand (11) such that there is no longer any interference between the peripheral equipment and the case (5).

5. A robot simulation apparatus according to claim 4,
**characterized in that** the peripheral equipment is a vision sensor (12) used to photograph the work pieces contained in the case (5).
